# EUROPÄISCHE PATENTSCHRIFT

(11) **EP 4 548 740 B1**
(45) Veröffentlichungstag und Bekanntmachung des Hinweises auf die Patenterteilung: **15.10.2025**
(21) Anmeldenummer: 23206658.9
(22) Anmeldetag: 30.10.2023
(51) Int. Cl.: A01D 34/00

(54) **TRAINIERBARE ZEITSTEUERUNG VON GARTENGERÄTEN MIT BENUTZERBEWERTUNG**
TRAINABLE TIMING CONTROL OF GARDEN APPLIANCES USING USER RATING
COMMANDE TEMPORELLE POUVANT ÊTRE ENTRAÎNÉE D'OUTILS DE JARDINAGE AVEC ÉVALUATION DE L'UTILISATEUR

(43) Veröffentlichungstag der Anmeldung: 07.05.2025
(73) Patentinhaber: AL-KO Geräte GmbH, 89359 Kötz (DE)
(72) Erfinder: Trumpp, Daniel, 86420 Diedorf (DE)
(74) Vertreter: ERNICKE Patent- und Rechtsanwälte PartmbB

(56) Entgegenhaltungen:
- EP-A1- 2 342 964
- WO-A1-2019/185929
- US-A1- 2017 020 064

## Beschreibung

Die Erfindung liegt auf dem Gebiet der Steuerung mobiler Gartengeräte zur Pflege einer Rasenfläche. Solche Gartengeräte können Mähroboter, Gartentraktoren, Rasenmäher oder andere mobile oder stationäre Arbeitsgeräte im Bereich der Garten-, Grünanlagen- und Landschaftsarbeit sein.

In der Praxis werden Rasenflächen häufig auf manuelle Veranlassung durch einen Benutzer oder in vorbestimmten regelmäßigen Abständen, z.B. täglich oder wöchentlich, gemäht. Besonders bei Mährobotern ist noch immer üblich, dass Rasenflächen täglich gemäht werden.

Aus US 2017/0020064 A1 ist ein Verfahren zum autonomen Mähen einer Rasenfläche bekannt. Der Mähroboter umfasst einen Sensor zur Messung der Grashöhe. Der Mähzeitplan kann auf Basis von schwankenden Wetterinformationen angepasst werden.

Die Erfindung beschäftigt sich mit der intelligenten Einsatzplanung und Steuerung von Gartengeräten. Es besteht das Bedürfnis, dass die Einsätze der Gartengeräte, z.B. eines Mähroboters, automatisch an sich verändernde Umgebungsbedingungen und Benutzerpräferenzen angepasst werden. Beispielsweise soll der Rasen möglichst automatisch dann gemäht werden, wenn eine bestimmte Grashöhe erreicht ist. Außerdem soll der Rasen nicht während Regen- oder anderen Sperrzeiten gemäht werden. Die Einsatzplanung und -konfiguration kann sich sowohl auf ein vollautomatisiertes Gartengerät (z.B. einen Mähroboter) oder ein halbautomatisiertes Gartengerät (z.B. einen Gartentraktor mit Mähwerk) beziehen, der technisch unterstützt von einem Menschen bedient wird.

Im Falle von Mährobotern ist neben dem Startzeitpunkt auch die Mähdauer von besonderer Bedeutung. Chaotisch navigierende Mähroboter, die die Rasenfläche in mehr oder minder zufälligen Bahnen mähen, benötigen ausreichend Zeit um die Rasenfläche vollständig und gleichmäßig zu mähen, wobei die Geschwindigkeit auch von der Grashöhe abhängen kann. Für eine optimale Mähdauer ist daher eine Optimierung zwischen Effizienz und Qualität des Mähergebnisses erstrebenswert.

Aus dem Stand der Technik ist es bekannt, die Arbeitszeiten von Gartengeräten durch die Verarbeitung von Regensensordaten oder Wetterdaten zu planen.

Es ist außerdem bekannt, für die Vorhersage des nächsten Mäheinsatzes das Graswachstums mit einer Graswachstumssimulation zu schätzen, d.h. modellbasiert zu berechnen. Die Graswachstumssimulation kann mit Wetterdaten und Daten der betrachteten Rasenfläche gespeist werden. Dabei können auch statische oder dynamische Ausschlusszeiten (z.B. Sonn- und Feiertage, Regenzeiten, Nachtzeiten) berücksichtigt werden. Solche Verfahren zur Ermittlung eines geeigneten Arbeitszeitfensters auf Basis einer Graswachstumssimulation werden hier als "simulative Verfahren" bezeichnet.

Nachteil der simulativen Verfahren ist, dass diese noch keine ausreichende Genauigkeit, Berücksichtigung lokaler Besonderheiten oder Anpassbarkeit an Benutzerbedürfnisse bieten.

Aufgabe der Erfindung ist es, eine verbesserte Technik zur Einsatzplanung und Steuerung von Gartengeräten aufzuzeigen. Die Erfindung löst die Aufgabe mit den Merkmalen der eigenständigen Ansprüche.

Die Erfindung basiert auf dem Grundgedanken, dass die Einsatzzeitplanung durch Training eines KI-Systems basierend auf simulativ erzeugten und von Benutzern bewerteten Arbeitszeitfenstern verbessert werden kann. Alternativ oder zusätzlich zu simulativ erzeugten Arbeitszeitfenstern können auch andere initiale Arbeitsplanungsverfahren eingesetzt werden. Für das Training werden vorzugsweise zunächst mit einem simulativen Verfahren, d.h. basierend auf einer Graswachstumssimulation, Arbeitszeitfenster für den nächsten Einsatz des Gartengeräts generiert, die dem Benutzer vor und/oder nach dem Einsatz des Gartengeräts zur Bewertung bereitgestellt werden. Der Benutzer wird aufgefordert, das Arbeitszeitfenster und ggfs. weitere Parameter zu bewerten, um Trainingsdatensätze zum Training eines KI-Systems zu generieren. Auf Basis der Trainingsdatensätze kann das KI-System, vorzugsweise ein künstliches neuronales Netz, insbesondere ein Zeitreihenmodell, trainiert werden, um anstelle des simulativen Verfahrens mit Graswachstumssimulation (oder eines anderen initialen Arbeitsplanungsverfahrens) das optimale Arbeitszeitfenster für zukünftige Einsätze des Gartengeräts zu ermitteln.

Die Erfindung kann mit verschiedenen initialen Arbeitsplanungsverfahren angewendet werden. Das initiale Arbeitsplanungsverfahren bezeichnet ein Verfahren zur Ermittlung von Arbeitszeitfenstern, das zumindest übergangsweise zur Generierung von Trainingsdaten verwendet wird, um anschließend mit den Trainingsdaten das KI-System zu trainieren. Nach ausreichendem Training kann das KI-System das initiale Arbeitsplanungsverfahren ersetzen und/oder ergänzen.

Das KI-System kann auch als KI-Modell, Mähzeitplanungsmodell oder intelligente Mähzeitplanung (intelligentes Mähen, engl. "smart mowing") bezeichnet werden. Dem Fachmann stehen mehrere bekannte trainierbare Modelle (z.B. künstliche neuronale Netze) zur Verfügung. Das KI-System ist vorzugsweise als ein Zeitreihenmodell ausgebildet. Vereinfacht gesagt liefert das KI-System für passend strukturierte Eingangsdaten (Wetterdaten, Gartengerätedaten, Raseneigenschaftsdaten, etc.) die gewünschten Ausgangsdaten (Startzeit, Arbeitsdauer, etc.). Die vorliegende Offenbarung umfasst sowohl das initiale Verfahren zur vorbereitenden Sammlung von Trainingsdaten (z.B. zum initialen Training des KI-Systems vor dessen Einsatz) als auch das Betriebsverfahren des trainierten KI-Systems. Vorzugsweise werden auch bei Einsatz des KI-Systems laufend weitere Trainingsdaten zur Verbesserung des KI-Systems gesammelt. Die Offenbarung umfasst auch Ausführungsformen als bloßes Betriebsverfahren des KI-Systems ohne weitere Benutzerbewertung und/oder Erzeugung von Trainingsdaten.

In der folgenden Offenbarung der Erfindung und der verschiedenen Ausführungsformen wird beispielhaft das simulative Verfahren mit einer Graswachstumssimulation als initiales Arbeitsplanungsverfahren beschrieben. In allen beschriebenen oder beanspruchten Ausführungsformen kann alternativ oder zusätzlich zum simulativen Verfahren auch ein anderes initiales Arbeitsplanungsverfahren oder nur das KI-System eingesetzt werden.

Als ein weiteres mögliches initiales Arbeitsplanungsverfahren können vom Benutzer manuell vorgegebene Arbeitszeitfenster verwendet werden. Diese manuell vorgegebenen Arbeitszeitfenster können, ggfs. unter Hinzunahme zusätzlicher Einsatzdaten (z.B. Sensordaten des Gartengeräts), zur Erzeugung von Bewertungsabfragen verwendet werden. Mit Aktivierung der Funktion zum Training des KI-Modells werden Trainingsdaten auf Basis der bewerteten Arbeitszeitfenster generiert.

Alternativ oder zusätzlich kann als initiales Arbeitsplanungsverfahren eine vom Benutzer konfigurierbare Regel, z.B. durch Vorgabe eines zeitlichen Abstands und eine Dauer, verwendet werden. Durch die Bewertungsabfragen und/oder zusätzliche Einsatzdaten (z.B. Sensordaten des Gartengeräts) können diese durch einfache Regeln erzeugten Arbeitszeitfenster verbessert werden.

Eine weiteres mögliches initiales Arbeitsplanungsverfahren nutzt zufällig generierte Arbeitszeitfenster. Es können insbesondere Arbeitszeitfenster, die mit einer Heuristik und/oder vom Benutzer konfigurierbaren Regel erzeugt wurden, mit zufallsgenerierten Werten variiert werden. Diese zufällig generierten Arbeitszeitfenster können (ggfs. mit Einsatzdaten) für Bewertungsabfragen und die Generierung von Trainingsdaten verwendet werden.

Das trainierte KI-System nutzt vorzugsweise ähnliche oder dieselben Eingangsdaten wie das simulative Verfahren. Bevorzugt wird das Arbeitszeitfenster auf Basis von Eingangsdaten ermittelt, die Wetterdaten (z.B. Messdaten und/oder Prognosen von einem Online-Wetterdienst für den Standort der zu pflegenden Rasenfläche), Gartengerätedaten (z.B. Typ des Gartengeräts, Flächenleistung, etc.), Benutzerprofildaten (z.B. Benutzereinstellungen, persönliche Ausschlusszeiten, Schwellwerte für Grashöhe, etc.), Raseneigenschaftsdaten (z.B. Ort, Fläche und Form des Rasenfläche, Grasart, Bewässerung, Bodenbeschaffenheit, etc.), historische Arbeitsdaten (z.B. Zeitpunkt der letzten Rasenpflege) und/oder Kalenderdaten (z.B. Sonn- und Feiertage) umfassen.

Vorzugsweise ermitteln sowohl das simulative Verfahren mit der Graswachstumssimulation als auch das KI-System ein Arbeitszeitfenster mit einer Startzeit und/oder einer Arbeitsdauer für einen zukünftigen Arbeitseinsatz des Gartengeräts. Beim simulativen Verfahren wird das Graswachstum seit der letzten Rasenpflege mit einer Graswachstumssimulation anhand der Wetter- und Rasendaten geschätzt. Sobald die Simulation eine Grashöhe, d.h. ein kumuliertes Graswachstum, oberhalb eines konfigurierbaren Schwellwertes prognostiziert, kann der nächste Einsatz des Gartengeräts geplant werden. Dabei können die genaue Startzeit und Dauer das Einsatzes an weitere Bedingungen (z.B. Nässe während und nach Regen, Ausschluss von Ruhezeiten) angepasst werden. Verschiedene mögliche Ausführungsformen eines simulatives Verfahrens mit Graswachstumssimulation im Sinne dieser Offenbarung können der europäischen Patentanmeldung EP23172108.5 entnommen werden.

Der Begriff Arbeitszeitfenster wird in dieser Offenbarung als Oberbegriff für ein vorgeschlagenes Arbeitszeitfenster und ggfs. korrigierte Arbeitszeitfenster verwendet. Das Arbeitszeitfenster kann je nach Ausführungsform insbesondere nur aus einer Startzeit (z.B. für handgeführte Rasenmäher) oder einer Startzeit und einer Arbeitsdauer (z.B. für automatisierte Mähroboter) bestehen. Die Arbeitsdauer kann dynamisch ermittelt oder fest vorgegeben sein.

Das trainierte KI-System hat den Vorteil, dass durch das Training mit Daten aus bewerteten, vergangenen Einsätzen vielfältige Einflüsse (z.B. lokale Besonderheiten der Rasenfläche, Benutzervorlieben, Modellfehler, Konfigurationsfehler) besser bzw. ohne explizite Konfiguration durch den Benutzer berücksichtigt werden können. Der Benutzer erhält mit der Zeit automatisch bessere Zeitvorschläge für die Pflege seines Gartens, die seinen persönlichen Vorlieben und den tatsächlichen Bedingungen besser genügen.

Die Bewertungsabfrage kann je nach Ausführungsform und Zeitpunkt der Abfrage, d.h. vor oder nach dem Einsatz, auf mehrere Arten erfolgen. Die Bewertungsabfrage wird auf einem Endgerät des Benutzers, z.B. über eine App auf einem Smartphone oder über eine Web-App in einem Webbrowser, bereitgestellt. Die Bewertungsabfrage ist derart strukturiert, dass der Benutzer aufgefordert wird, die vorbestimmten Benutzerbewertungsdaten einzugeben. Vorzugsweise werden ihm dabei die jeweils zu bewertenden Daten (z.B. das vorgeschlagene Arbeitszeitfenster) angezeigt. Die Bewertungsabfrage kann mehrere Abfrageschritte umfassen, die aufeinander aufbauen können und sowohl qualitative (z.B. gut, schlecht, länger, kürzer, früher, später) als auch quantitative Bewertungen umfassen (z.B. gewünschte Startzeit, gewünschte Arbeitsdauer, x Stunden/Tage früher/später, x Stunden kürzer/länger).

Die Benutzerbewertungsdaten umfassen in einer vorteilhaften Ausführungsform zumindest eine qualitative Bewertung (z.B. gefällt mir/gefällt mir nicht) des Startzeitpunkts und/oder der Arbeitsdauer des Arbeitszeitfensters. Das Arbeitszeitfenster kann zum Zeitpunkt der Bewertung in der Vergangenheit, Gegenwart oder Zukunft liegen. Bewertet der Benutzer einen Aspekt des Arbeitszeitfensters negativ, werden vorzugsweise weitere Benutzerbewertungsdaten zu diesem Aspekt abgefragt (z.B. das gewünschte Arbeitszeitfenster, eine gewünschte Startzeit, eine gewünschte Arbeitsdauer, früher oder später, mehr oder weniger Graswachstum bis Mäheinsatz).

Durch die Bewertung des maschinell vorgeschlagenen Arbeitszeitfensters kann ein Trainingsdatensatz mit zusätzlicher Information zur Eignung des vorgeschlagenen Arbeitszeitfensters generiert werden, mit dem sich das System durch maschinelle Lernverfahren verbessern lässt. Qualitative Bewertungen können beispielsweise für bestärkende Lernverfahren (engl. reinforcement learning) verwendet werden. Alternativ oder zusätzlich können aus quantitative Bewertungen, insbesondere mit expliziten gewünschten Werten für das Arbeitszeitfenster als "wahre" Ausgangsdaten, in Kombination mit den zugehörigen Eingangsdaten Trainingsdatensätze für überwachtes Lernen erzeugt werden.

Für den Benutzer ist es dank des erfindungsgemäßen Verfahrens möglich, das System zur Erzeugung geeigneter Arbeitszeitfenster für sein Gartengerät zu trainieren, ohne dass vom Hersteller manuell Trainingsdaten erzeugt werden müssen. Der Benutzer kann durch seine Bewertungen, die sich auf seine persönlichen Vorlieben, seinen individuellen Garten und sein individuelles Gartengerät beziehen, im Betrieb eine benutzerspezifische Verbesserung des Systems erreichen. Das Training erfolgt für den Benutzer intuitiv durch die Beantwortung der Bewertungsabfragen.

Alternativ oder zusätzlich kann der Benutzer mit seinen Bewertungen auch ein System verbessern, das für eine Vielzahl von Benutzern und Geräten eingesetzt wird. Durch die von einer Vielzahl von Benutzern abgegebenen Bewertungen lassen sich große Mengen an Trainingsdaten sammeln, die ganz oder teilweise auch zum Training eines gemeinsam genutzten Systems dienen.

Bewertet der Benutzer das Arbeitszeitfenster im Voraus, können die Benutzerbewertungsdaten zur Korrektur des Arbeitszeitfensters für die Steuerung des Gartengeräts verwendet werden. Vorzugsweise wird ein korrigiertes Arbeitszeitfenster auf Basis der Benutzerbewertungsdaten erzeugt, das anschließend anstelle des ursprünglich vorgeschlagenen Arbeitszeitfensters zur Steuerung des Gartengeräts verwendet wird. Zur Erzeugung von Trainingsdaten können auch trotz eines bereits erfolgten Einsatzes korrigierte Arbeitszeitfenster auf Basis nachträglicher Benutzerbewertungen erzeugt werden.

Bewertet der Benutzer das Arbeitszeitfenster im Nachhinein, kann das tatsächliche Arbeitszeitfenster und/oder das Arbeitsergebnis (z.B. Gleichmäßigkeit der gemähten Fläche) bewertet werden. Außerdem können Einsatzdaten (z.B. Sensordaten des Gartengeräts oder tatsächlich erfasste Wetterdaten) berücksichtigt werden.

Es können insbesondere mehrere Bewertungsabfragen zum selben Einsatz des Gartengeräts durchgeführt werden. Beispielsweise kann eine Bewertungsabfrage zum vorhergesagten Arbeitszeitfenster im Voraus, eine weitere Bewertungsabfrage kurz zuvor am selben Tag des Arbeitszeitfensters und eine weitere Bewertungsabfrage nach Beendigung des Einsatzes erfolgen. Je nach Zeitpunkt der Benutzerabfrage verfügen der Benutzer und das System über unterschiedliche Informationen. Beispielsweise kann der Benutzer am Tag des geplanten Arbeitszeitfensters kurz am besten abschätzen, ob die derzeitige Grashöhe bereits der gewünschten Graswachstumsschwelle entspricht, ab der gemäht werden soll. Nach Beendigung des Einsatzes kann der Benutzer die Dauer des Mäheinsatzes anhand des Zustands der gemähten Rasenfläche beurteilen.

Die Bewertungsabfrage kann insbesondere eine Push-Benachrichtigung zu einem oder mehreren vorbestimmten Zeitpunkten enthalten. Die Bewertungsabfrage kann aktualisiert werden, wenn beispielsweise das Arbeitszeitfenster aufgrund einer geänderten Wetterprognose neu berechnet wurde oder der Einsatz inzwischen in der Vergangenheit liegt. Alternativ oder zusätzlich kann der Benutzer auch auf eigene Initiative Benutzerbewertungsdaten, beispielsweise über eine Einsatzhistorie, eingeben.

Die simulativ oder mittels des KI-Sytems erzeugten Arbeitszeitfenster werden zur Steuerung des Gartengeräts verwendet werden. Im Falle eines automatisiert gesteuerten Gartengeräts (z.B. einem Mähroboter) kann das Arbeitszeitfenster über eine Geräteschnittstelle an die Steuerung des Gartengeräts übergeben werden. Bei halbautomatisierten Gartengeräten (z.B. Rasenmähern oder Gartentraktoren zum manuellen Betrieb) kann das Arbeitszeitfester über die Geräteschnittstelle als Benutzungshilfe an das Gartengerät selbst oder ein Endgerät (z.B. Smartphone) des Benutzers übergeben werden.

Auf Basis des vorhergesagten Arbeitszeitfensters und der Benutzerbewertungsdaten können Trainingsdatensätze erzeugt und in einer Trainingsdatenbank gespeichert werden. Mit diesen Trainingsdaten kann ein KI-System trainiert werden, das ausgehend von neuen Eingangsdaten bessere Arbeitszeitvorschläge erzeugen kann. Das Training kann sowohl initial zur erstmaligen Inbetriebnahme des KI-Systems als auch zur inkrementellen Verbesserung des KI-Systems durchgeführt werden. Vorzugsweise wird das System in regelmäßigen Updatezyklen trainiert.

Vorzugsweise wird ein gemeinsames KI-System für mehrere Benutzer und/oder Geräte eingesetzt. Das KI-System kann mit Trainingsdaten von einer Vielzahl von Benutzern oder Geräten trainiert werden. Vorteilhafterweise ist das KI-System dazu ausgebildet, benutzerspezifische Eingabedaten zu verarbeiten. Besonders die Kombination aus benutzerübergreifendem KI-System und/oder benutzerübergreifendem Training und benutzerspezifischen Eingabedaten ermöglicht eine effektive Verbesserung des Systems durch hohe Trainingsdatenmengen und benutzerindividuellen Arbeitszeitplanungen.

Alternativ oder zusätzlich kann für den Benutzer bzw. ein Benutzerszenario (Kombination aus Benutzer, Gartengerät und/oder Rasenfläche) ein individuelles KI-System eingesetzt, das speziell auf den Benutzer bzw. das Benutzerszenario trainiert werden kann. Vorteilhafter werden generisch vortrainierte KI-Systeme eingesetzt, die anschließend mit für den Benutzer bzw. das Benutzerszenario spezifischen Trainingsdaten nachtrainiert werden können.

Das KI-System kann anstelle oder zusätzlich zum simulativen Verfahren mit Graswachstumssimulation eingesetzt werden, um geeignete Arbeitszeitfenster zu ermitteln. Es ist insbesondere möglich die Ergebnisse des simulativen Verfahrens und des KI-Systems miteinander zu vergleichen und/oder vom Benutzer bewerten zu lassen.

Die Erfindung ermöglicht eine zeitliche Steuerung von Gartengeräten, die effizienter in der Ressourcennutzung ist und besser an die individuellen Begebenheiten des Einsatzszenarios des Gartengeräts angepasst ist.

Weitere Ausführungsformen und vorteilhafte Merkmale der Erfindung werden nachfolgend anhand der Zeichnungen beschrieben.

Die Erfindung ist in den Zeichnungen beispielhaft und schematisch dargestellt. Diese zeigen:
- Figur 1:: ein Ablaufdiagramm einer möglichen Ausführungsformen des Verfahrens mit Benutzerbewertung im Voraus und Korrektur des Arbeitszeitfensters vor dem Einsatz des Gartengeräts;
- Figur 2:: ein Ablaufdiagramm einer weiteren Ausführungsform des Verfahrens mit Benutzerbewertung nach Einsatz des Gartengeräts;
- Figur 3:: Funktionsweise eines simulativen Verfahrens mit Graswachstumssimulation;
- Figur 4:: Darstellung eines geplanten Arbeitszeitfensters für einen Mähroboter in einer App;
- Figur 5:: Darstellung eines Zeitplans für Regenzeiten, Mähzeiten und Ausschlusszeiten in einer App;
- Figur 6:: Darstellung einer Bewertungsabfrage in einer App;
- Figur 7:: Ablauf einer strukturierten Bewertungsabfrage mit Eingabe der Benutzerbewertungsdaten in einer App;
- Figur 8:: Ablauf einer strukturierten Bewertungsabfrage mit Eingabe der Benutzerbewertungsdaten in einer App.

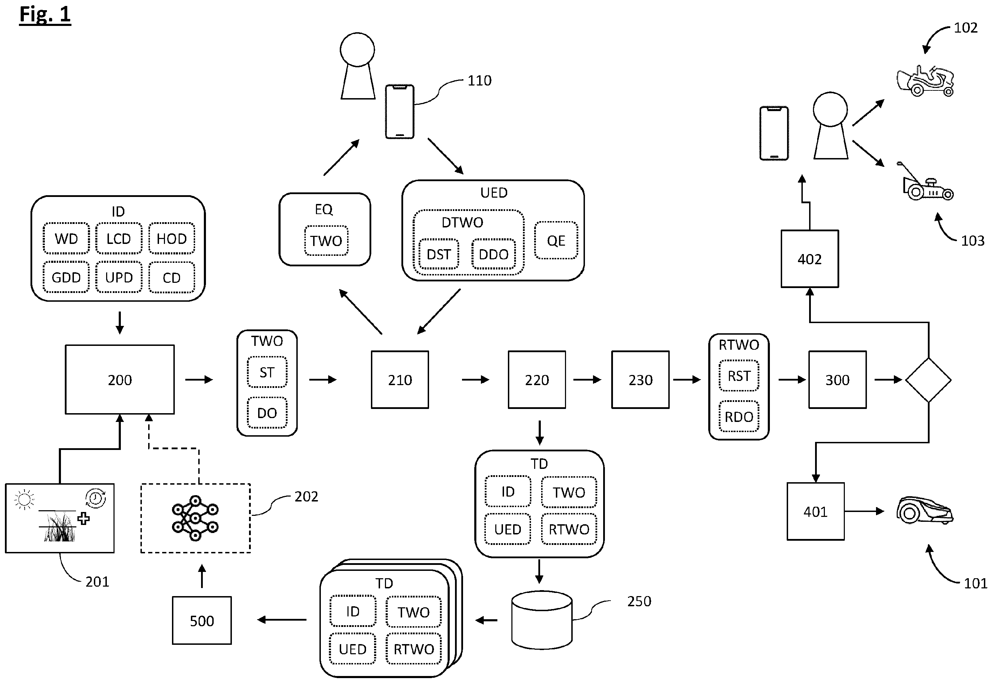

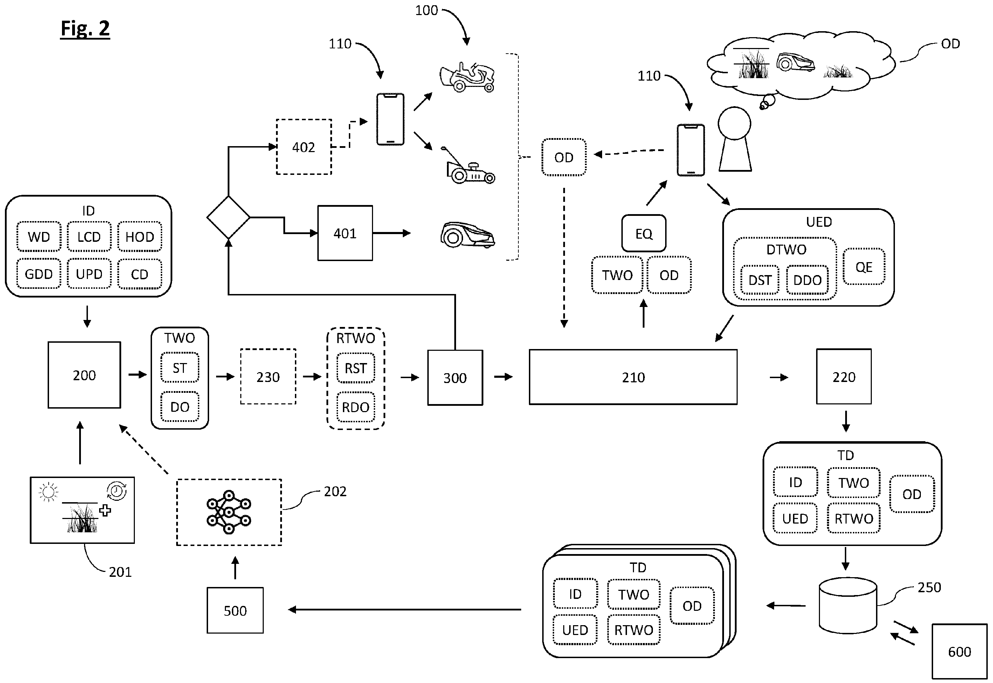

Zwei mögliche Ausführungsformen des computerimplementierten Verfahrens sind in den Figuren 1 und 2 dargestellt. Das computerimplementierte Verfahren lässt sich mit mehreren Verfahrensschritten beschreiben, die neben der dargestellten und hier beschriebenen Reihenfolge auch in anderer Reihenfolge durchgeführt werden können.

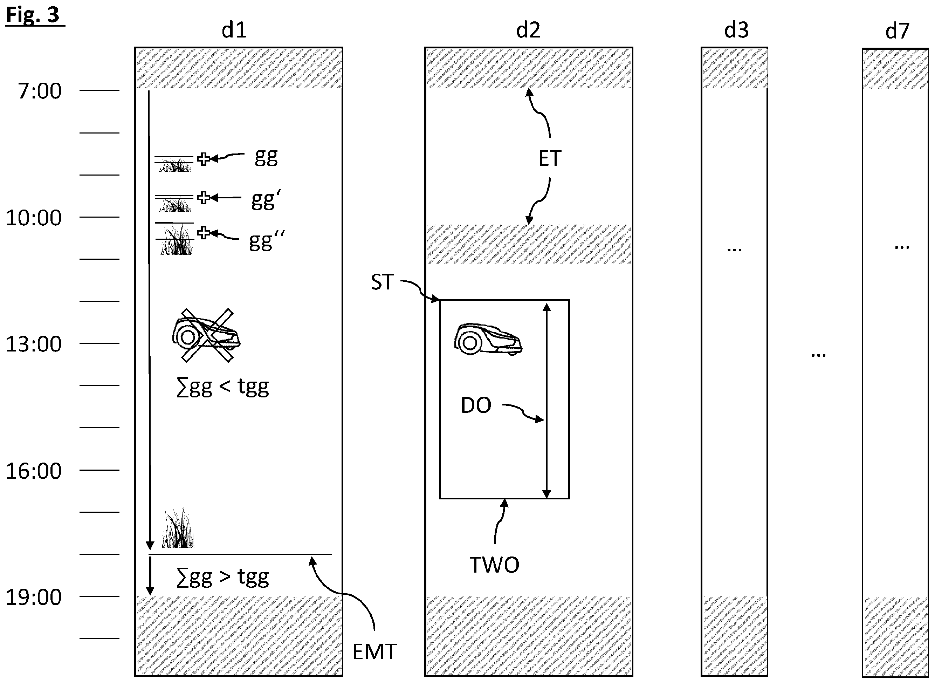

Zu Beginn des dargestellten Ablaufs erfolgt die Arbeitsplanung (200). Dabei wird in einem simulativen Verfahren mit einer Graswachstumssimulation (201) und/oder mit einem trainierten KI-System (202) ein Arbeitszeitfenster (TWO) für einen zukünftigen Einsatz des Gartengeräts (100) ermittelt. Zur Ermittlung des Arbeitszeitfensters (TWO) werden mehrere Eingangsdaten (ID) verarbeitet. Vorzugsweise werden als Eingangsdaten (ID) Wetterdaten (WD), Raseneigenschaftsdaten (LCD), Gartengerätdaten (GDD), historische Arbeitsdaten (HOD) und/oder Kalenderdaten (CD) verarbeitet. Die Offenbarung umfasst explizit jede mögliche Kombination der hier offenbarten Eingangsdaten (ID). Die Funktionsweise des simulativen Verfahrens wird weiter unten in Bezug auf Figur 3 näher erläutert.

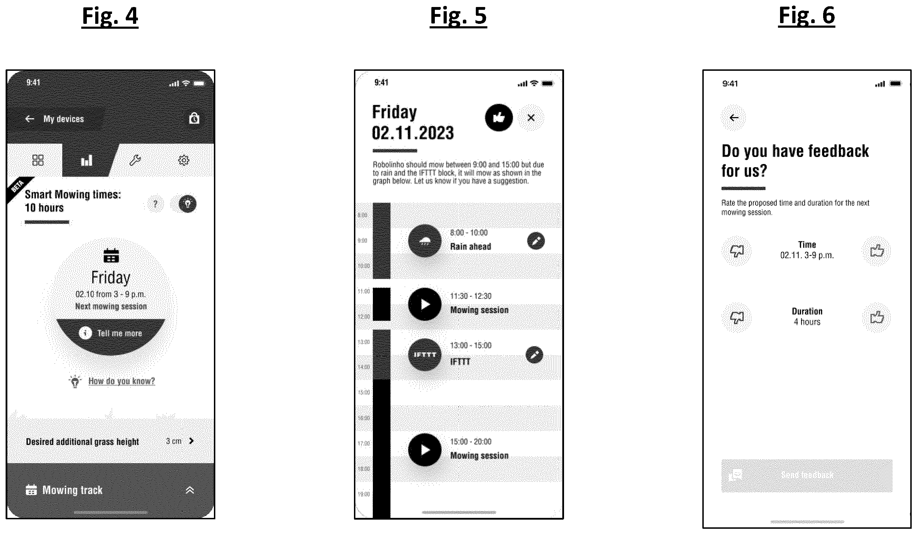

Als nächster Schritt folgt in Figur 1 eine Bewertungsabfrage (210). Es wird eine Bewertungsabfrage (EQ) des Arbeitszeitfensters (TWO) erzeugt und auf einem Endgerät (110) bereitgestellt. Der Benutzer kann das vorgeschlagene Arbeitszeitfenster (TWO) beispielsweise wie in den Figuren 4, 5 und 6 dargestellt in einer App angezeigt bekommen. Der Benutzer kann die Bewertungsabfrage insbesondere durch Betätigung einer entsprechenden Schaltfläche starten. Der Benutzer gibt seine Benutzerbewertungsdaten (UED) ein. Die Benutzerbewertungsdaten (UED) können verschiedene qualitative und/oder quantitative Bewertungen umfassen. Vorzugsweise wird eine qualitative Bewertung (QE) des Arbeitszeitfensters (TWO) bzw. der Startzeit (ST) und/oder der Arbeitsdauer (DO) eingegeben. Die qualitative Bewertung kann beispielsweise eine positive ("gefällt mir", Daumen hoch, etc.) oder negative ("gefällt mir nicht", Daumen runter, etc.) Bewertung umfassen. Alternativ oder zusätzlich können die Benutzerbewertungsdaten quantitative Bewertungen, beispielsweise ein vom Benutzer gewünschtes Arbeitszeitfenster (DTWO), eine gewünschte Startzeit (DST) oder eine gewünschte Arbeitsdauer (DDO) umfassen. Statt der expliziten Zeiten oder Dauern kann der Benutzer auch andere Formen der Bewertung zur Anpassung des Arbeitszeitfensters eingeben.

Die Benutzerbewertungsdaten (UED) werden gespeichert, vorzugsweise in Verbindung mit dem zugehörigen bewerteten Arbeitszeitfenster (TWO) und/oder den zugehörigen Eingangsdaten (ID), die zur Ermittlung des Arbeitszeitfensters verwendet wurden.

In einem weiteren Schritt (220) wird ein Trainingsdatensatz (TD) erzeugt. Der Trainingsdatensatz (TD) umfasst vorzugsweise das bewertete Arbeitszeitfenster (TWO), die zugehörigen Benutzerbewertungsdaten (UED), die zugehörigen Eingangsdaten (ID) und ggfs. ein korrigiertes Arbeitszeitfenster (RTWO). Der Trainingsdatensatz (TD) kann auch nur einen Teil dieser Daten und/oder zusätzliche Daten umfassen. Insbesondere können aus den Benutzerbewertungsdaten (UED) in einem Zwischenschritt Trainingsdaten abgeleitet werden. Beispielsweise kann aus einer qualitativen Bewertung (z.B. "spätere Startzeit") und/oder einer quantitativen Bewertung (z.B. "1 Stunde länger mähen") in einem Zwischenberechnungsschritt ein Zielwert berechnet werden.

Der Trainingsdatensatz (TD) wird vorzugsweise in einer Trainingsdatenbank (250) gespeichert. Die Trainingsdatenbank (250) kann spezifisch für den Benutzer oder das jeweilige Benutzerszenario vorgesehen sein.

Die Trainingsdatensätze (TD) können in einer besonders vorteilhaften Ausführungsform in Abhängigkeit der Benutzerbewertungsdaten (UED) und/oder anderen Gewichtungsfaktoren (z.B. Vertrauenswürdigkeit des Benutzers, Plausibilität der Bewertungsdaten) gewichtet werden. Das zugeordnete Gewicht kann insbesondere beim Trainingsverfahren des KI-Systems (202) verwendet werden, um bestimmte Trainingsdaten stärker zu berücksichtigen. Auf diese Weise können insbesondere Bewertungen bestimmter Benutzer stärker in das Training des Systems einfließen als andere.

In einem weiteren optionalen Schritt (230) wird eine korrigiertes Arbeitszeitfenster (RTWO) berechnet. Vorzugsweise wird das korrigierte Arbeitszeitfenster (RTWO), die korrigierte Startzeit (RST) und/oder die korrigierte Arbeitsdauer (RDO) auf Basis der Benutzerbewertungsdaten (UED) ggfs. mit Zwischenberechnungsschritten ermittelt. Im einfachsten Fall wird das Arbeitszeitfenster, die Startzeit und/oder die Arbeitsdauer mit einem explizit vom Benutzer gewünschten Arbeitszeitfenster (DTWO), einer gewünschten Startzeit (DST) und/oder einer gewünschten Arbeitsdauer (DDO) ersetzt. Alternativ oder zusätzlich können die Werte des korrigierten Arbeitszeitfensters aus Zwischenberechnungen, insbesondere auf Basis qualitativer Bewertungen mit Richtungsangabe (z.B. später, früher, länger, kürzer) mit vorgegebenen Berechnungsmethoden oder Heuristiken ermittelt werden.

Vorzugsweise werden bei der Berechnung der korrigierten Arbeitszeitfenster (RTWO) auch die Eingangsdaten (z.B. Ausschlusszeiten aus dem Benutzerprofil oder Regenzeiten) berücksichtigt.

Der Schritt zur Berechnung des korrigierten Arbeitszeitfensters (230) findet vorzugsweise vor der Speicherung des Trainingsdatensatzes (TD) statt, sodass das korrigierte Arbeitszeitfenster (RTWO) in den Trainingsdatensatz (TD) aufgenommen werden kann.

In einem weiteren Schritt (300) erfolgt die Ansteuerung des Gartengeräts (100). Das Gartengerät (100), vorzugsweise ein Rasenmähroboter (101), ein Gartentraktor (102) oder ein handgeschobener Rasenmäher (103), wird über eine Steuerungsschnittstelle (401, 402) angesteuert. Im Falle eines automatisierten Mähroboters (101) kann das Arbeitszeitfenster (TWO) bzw. ein korrigiertes Arbeitszeitfenster (RTWO) direkt über eine Steuerschnittstelle (401) an eine Steuerung des Gartengeräts übertragen werden, sodass das Gartengerät zur Startzeit aktiviert wird. Im Falle eines halbautomatisierten Gartengeräts (z.B. einem Gartentraktor) kann das Arbeitszeitfenster über eine Nachrichtenschnittstelle (402) auf einem Endgerät des Benutzers bereitgestellt werden. Dabei können dem Benutzer Handlungsempfehlungen zur Bedienung des Gartengeräts gegeben werden, die vom Benutzer umgesetzt werden können.

In einer vorteilhaften Ausführungsform können auch Flotten aus mehreren Gartengeräten desselben oder unterschiedlichen Typs angesteuert werden. Die Arbeitszeitfenster können für jeweils ein einziges oder mehrere Gartengeräte erzeugt werden. Alternativ oder zusätzlich können die Arbeitszeitfenster zwischen den Gartengeräten und/oder Rasenflächen koordiniert werden.

Nachdem eine ausreichende Zahl an Trainingsdatensätzen (TD) gesammelt wurde, kann das KI-System (202) erstmals oder erneut trainiert werden. In einem Schritt (500) wird das KI-System (202) mit Trainingsdaten (TD) trainiert. Das Training erfolgt vorzugsweise asynchron zum Betrieb des Verfahrens, beispielsweise in Wartungsintervallen oder nach Erreichen einer ausreichenden Zahl von Trainingsdatensätzen.

Sobald das KI-System (202) zumindest initial trainiert wurde, kann das KI-System (202) zusätzlich oder anstelle des simulativen Verfahrens mit Graswachstumssimulation (201) zur Ermittlung geeigneter Arbeitszeitfenster eingesetzt werden.

Figur 2 zeigt eine Ausführungsform des Verfahrens, bei dem eine Bewertungsabfrage (210) nach der Gerätesteuerung (300), d.h. nach dem Einsatz des Gartengeräts (100) in einem zuvor ermittelten Arbeitszeitfenster (TWO) oder korrigierten Arbeitszeitfenster (RTWO).

Wenn der bewertete Einsatz des Gartengeräts bereits stattgefunden hat oder noch läuft, können bei der Benutzerbewertung (210) nicht nur das Arbeitszeitfenster (TWO), sondern auch Einsatzdaten (OD) berücksichtigt werden. Die Einsatzdaten (OD) können von einem Gartengerät (100), beispielsweise von einem Steuergerät oder einer Sensorik des Mähroboters, bezogen werden und/oder über ein Endgerät (110) eingegeben werden. Die Einsatzdaten (OD) können Betriebsdaten des Gartengeräts (100) und/oder Daten über den Verlauf bzw. das Ergebnis des Einsatzes des Gartengeräts (100) umfassen.

In möglichen Ausführungsformen können als Einsatzdaten (OD) beispielsweise der Mähwiderstand eines Mähroboters während des Einsatzes aufgezeichnet werden oder die tatsächliche Dauer des Mäheinsatzes eines Gartentraktors aufgezeichnet werden. Alternativ oder zusätzlich kann der Benutzer das Ergebnis des Einsatzes, z.B. die Qualität des Schnittbildes oder die Grashöhe, als Einsatzdaten eingeben.

Die Einsatzdaten (OD) können alternativ oder zusätzlich zum Arbeitszeitfenster (TWO) Gegenstand der Bewertungsabfrage (EQ) sein. Beispielsweise kann der Benutzer gefragt werden, ob er mit dem Ergebnis des Mäheinsatzes zufrieden ist oder ob die Dauer des Mäheinsatzes geeignet war, da der Mähwiderstand bereits frühzeitig auf ein vollständiges Abmähen der Rasenfläche hindeutet.

Die Einsatzdaten (OD) können (mit oder ohne Benutzerbewertung) in den Trainigsdatensatz (TD) einfließen. Durch die Berücksichtigung von Einsatzdaten (OD), insbesondere von Betriebsdaten des Gartengeräts und/oder Benutzereingabedaten über das Einsatzergebnis, kann das KI-System durch Training eine noch bessere Einsatzplanung vornehmen, als es mit dem simulativen Verfahren möglich wäre. Auf diese Weise können mehr Eingangsgrößen und Randbedingungen sowie nicht explizit im simulativen Verfahren berücksichtigbare Einflussgrößen Eingang in die Einsatzplanung finden.

Figur 3 zeigt schematisch die Funktion eines simulativen Verfahrens mit Graswachstumssimulation. Auf Basis der Eingangsdaten (ID), insbesondere der Wetterdaten (WD) und der Raseneigenschaftsdaten (LCD) und der historischen Arbeitsdaten (HOD), wird zunächst mit der Graswachstumssimulation (201) das Graswachstum (gg) seit dem letzten Mäheinsatz geschätzt. Das Graswachstum (gg) für wir mehrere Zeitperioden geschätzt und akkumuliert. Der Zeitpunkt, an dem das akkumulierte Graswachstum eine Graswachstumsschwelle (tgg) überschreitet, kann als frühester Mähzeitpunkt (EMT) betrachtet werden. Die Startzeit (ST) wird nach diesem frühesten Mähzeitpunkt (EMT) geplant. Bei der Planung des Arbeitszeitfensters (TWO) können die Arbeitsdauer (DO) und verschiedene Ausschlusszeiten (ET), z.B. Nässezeiten während und nach Regen, Ruhezeiten oder Sperrzeiten durch Betrieb anderer Gartengeräte, berücksichtigt werden. Das Arbeitszeitfenster kann ein- oder mehrteilig geplant werden, wobei für den Teil auch eine Mindestdauer berücksichtigt werden kann.

In der in Figur 3 dargestellten Simulation wird anhand der Eingangsdaten (Wetterdaten, Raseneigenschaftsdaten, etc.) das Graswachstum (gg) in mehreren Zeitintervallen (bspw. stündlich oder täglich) simuliert und über die Zeit akkumuliert. Am als d1 bezeichneten Tag wird die vom Benutzer konfigurierte Graswachstumsschwelle (tgg) voraussichtlich überschritten. Das System plant eine Arbeitsdauer (DO) von 5 Stunden. Das hier dargestellte System plant einteilige Arbeitszeitfenster. Die Graswachstumsschwelle (tgg) kann vorzugsweise durch den Benutzer als maximale zusätzliche Grashöhe bis zum nächsten Mäheinsatz eingestellt werden.

Das System berücksichtigt als Ausschlusszeiten (ET) Nachtzeiten vor und nach Sonnenuntergang sowie eine prognostizierte Regenzeit an Tag 2 (d2) zwischen 10 Uhr und 11 Uhr, nach der noch eine Pufferzeit zum Trocknen berücksichtigt wird. Auf diese Weise plant das simulative Verfahren mit der Graswachstumssimulation (201) das nächste Arbeitszeitfenster für den Mähroboter an Tag 2 (d2) zwischen 12 Uhr und 17 Uhr.

Das vom simulativen Verfahren vorgeschlagene Arbeitszeitfenster (TWO) kann dem Benutzer nun vor, während oder nach dem Einsatz in einer Bewertungsabfrage (EQ) zur Bewertung vorgelegt werden, um auf Basis der Benutzerbewertungsdaten geeignete Trainingsdaten (TD) zur Verbesserung der Einsatzplanung zu erzeugen. Nach ausreichendem Training des KI-Systems (202) kann anstelle des in Figur 3 illustrierten simulativen Verfahrens ein Vorschlag für das nächste Arbeitszeitfenster das KI-System erfolgen.

Die Figuren 4, 5 und 6 zeigen mögliche Darstellungen der vom System vorgeschlagenen Arbeitszeitfenster (TWO) in einer App auf einem Endgerät des Benutzers. Vorzugsweise hat der Benutzer zum dargestellten Zeitpunkt bereits sein System konfiguriert, d.h. sein Gartengerät, seine zu bearbeitende Rasenfläche sowie seine Benutzerpräferenzen eingestellt. Das System schlägt in Figur 4 als nächstes Arbeitszeitfenster des Gartengeräts ("smart mowing time") Freitag, den 2. Oktober zwischen 15 Uhr und 21 Uhr (3 - 9 pm) vor. Durch Schaltflächen ("tell me more", "how do you know") kann der Benutzer mehr Informationen über das Zustandekommen dieser Einsatzplanung erfahren. Die Graswachstumsschwelle (tgg) hat der Benutzer im Fall der Figur 4 auf 3 cm eingestellt. Das bedeutet, dass der Rasen (unabhängig von der im Gerät eingestellten Schnitthöhe) seit dem letzten Mäheinsatz um 3 cm wachsen soll, bis er wieder gemäht wird. Hierdurch kann eine erhebliche Effizienzsteigerung bei Energieverbrauch und Verschleiß des Mähroboters gegenüber täglichem Mähen erreicht werden. Der Benutzer hat außerdem die Möglichkeit vergangene Mäheinsätze ("mowing track") über eine entsprechende Schaltfläche auszuwählen.

Figur 5 zeigt eine mögliche Darstellung eines mehrteiligen Arbeitszeitfensters am 2. November 2023. Zwischen 8 Uhr und 10 Uhr ist Regen vorhergesagt. Das System plant einen ersten Teil des Mäheinsatzes zwischen 11:30 Uhr und 12:30 Uhr. Eine über eine Schnittstelle IFTTT bezogene Ausschlusszeit zwischen 13 Uhr und 15 Uhr wird als Unterbrechung des Mäheinsatzes berücksichtigt. Der zweite Teil des Arbeitszeitfensters erfolgt zwischen 15 Uhr und 20 Uhr.

Die Bewertungsabfrage kann über mehrere Weisen vom System und/oder vom Benutzer ausgelöst werden. Beispielsweise kann der Benutzer durch Betätigung einer Bewertungsschaltfläche (z.B. Symbol "Daumen hoch") eine Bewertungsabfrage (EQ) starten. Alternativ oder zusätzlich kann das System (z.B. als Push-Nachricht) den Benutzer auffordern, Benutzerbewertungsdaten (UED) einzugeben.

Figur 6 zeigt eine beispielhafte Darstellung einer Bewertungsabfrage (EQ) in einer App. Die Bewertungsabfrage umfasst ein vorgeschlagenes Arbeitszeitfenster (TWO) mit einer Startzeit (ST) am 2. November und 15 Uhr (3 pm) und einer Arbeitsdauer (DO) von 4 Stunden (4 hours). Der Benutzer kann die Startzeit und/oder die Arbeitsdauer durch geeignete Schaltflächen qualitativ und/oder quantitativ bewerten. In Figur 6 kann der Benutzer die Startzeit und/oder die Arbeitsdauer als positiv ("Daumen hoch") oder negativ ("Daumen runter") bewerten.

In einer vorteilhaften Ausführungsform ist die Bewertungsabfrage in mehreren Schritten strukturiert. Vorzugsweise bauen die Schritte abhängig vom Bewertungsergebnis aufeinander auf. Beispielsweise kann zunächst eine qualitative Bewertung abgefragt werden und nur im Falle einer negativen Bewertung eine weitere Abfrage, z.B. eine qualitative Bewertung mit Richtung oder eine quantitative Bewertung mit gewünschten mit expliziten Werten, abgefragt werden.

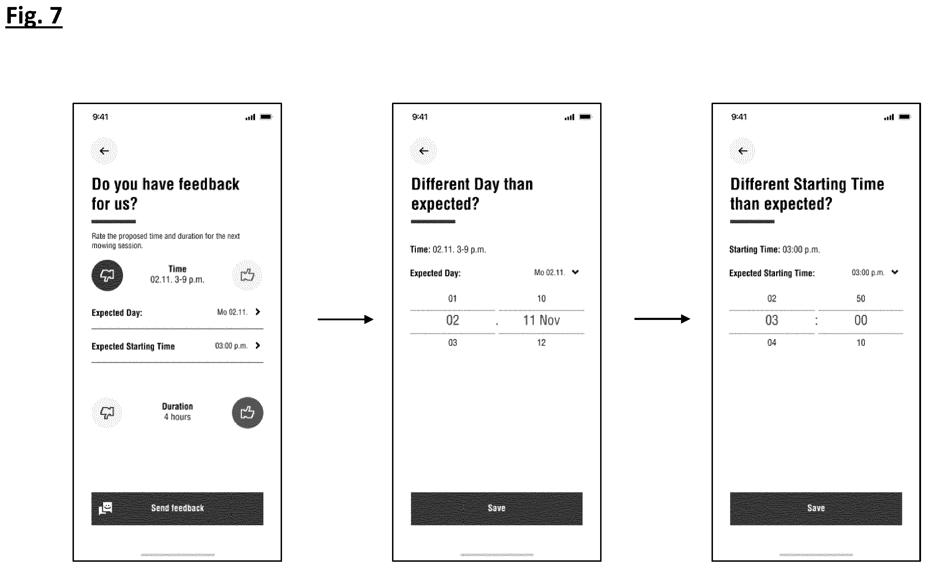

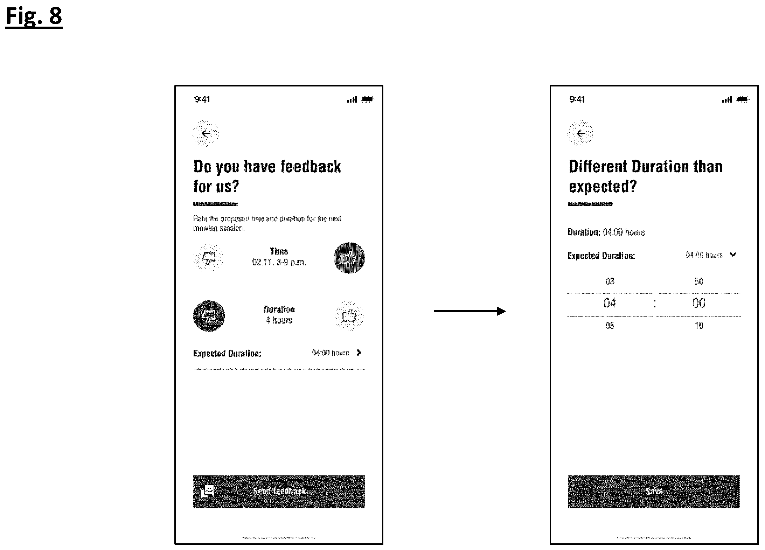

Die Figuren 7 und 8 zeigen beispielhaft eine Folge von Darstellungen in einer App für mehrstufige Bewertungen eines Arbeitszeitfensters.

In Figur 7 bewertet der Benutzer die vorgeschlagene Startzeit (ST) am 2. November um 15 Uhr negativ und die Arbeitsdauer (DO) von 4 Stunden positiv. Daraufhin wird der Benutzer aufgefordert, den von ihm gewünschte Startzeit (DST) durch Eingabe des gewünschten Datums und der gewünschten Uhrzeit einzugeben.

In Figur 8 bewertet der Benutzer hingegen die Startzeit am 2. November um 15 Uhr als positiv, jedoch die vorgeschlagene Arbeitsdauer (DO) von 4 Stunden als negativ. Entsprechend wir der Benutzer nach seiner gewünschten Arbeitsdauer (DDO) gefragt, die er in einem nachfolgenden Bildschirm eingeben kann.

Neben den in den Zeichnungen gezeigten Ausführungsformen kann das Verfahren in einer Vielzahl anderer Ausführungsformen umgesetzt werden. Die Offenbarung umfasst ebenso alle kombinierbaren Ausführungsformen, die sich durch Kombination der einzelnen hier offenbarten Merkmale ergeben. Insbesondere kann die Reihenfolge der hier offenbarten Schritte variiert werden. Das beanspruchte Verfahren lässt sich ebenfalls mit den in der Beschreibung offenbarten Schritten definieren, wobei der Anspruchsgegenstand nicht auf die Reihenfolge dieser Schritte beschränkt ist.

**Bezugszeichen**

| | | |
|---|---|---|
| 100 | Gartengerät | garden device |
| 101 | Mähroboter | mowing robot |
| 102 | Gartentraktor | garden tractor |
| 103 | Rasenmäher | mower |
| 110 | Endgerät | terminal device |
| 200 | Arbeitsplanung | operation planning |
| 201 | Graswachstumssimulation | grass growth simulation |
| 202 | KI-System | AI system |
| 210 | Bewertungsabfrage | evaluation processing |
| 220 | Trainingsdatenerzeugung | training data generation |
| 250 | Trainingsdatenbank | training data base |
| 230 | Zeitfensterkorrektur | time window rectification |
| 300 | Gerätesteuerung | device control |
| 401 | Steuerschnittstelle | control interface |
| 402 | Nachrichtenschnittstelle | message interface |
| 500 | Training | training |
| 600 | Trainingsdatenfilterung | |
| TWO | Arbeitszeitfenster | time window for operation |
| ST | Startzeit | start time |
| DO | Arbeitsdauer | duration of operation |
| RTWO | korrigiertes Arbeitszeitfenster | rectified time window for operation |
| DTWO | gewünschtes Arbeitzeitfenster | desired time window for operation |
| DST | gewünschte Startzeit | desired start time |
| DDO | gewünschte Arbeitsdauer | desired duration of operation |
| QE | qualitative Bewertung | qualitative evaluation |
| d1, d2 | Tag 1, Tag 2, ... | day 1, day 2, ... |
| 99 | Graswachstum, je Periode | grass growth, per period |
| tgg | Graswachstumsschwelle | threshold for grass growth |
| ET | Ausschlusszeiten | exclusion times |
| EMT | frühester Mähzeitpunkt | earliest mowing time |
| ID | Eingangsdaten | input data |
| GDD | Gartengerätdaten | garden device data |
| wn | Wetterdaten | weather data |
| UPD | Benutzerprofildaten | user profile data |
| LCD | Raseneigenschaftsdaten | lawn characteristics data |
| HOD | historische Arbeitsdaten | historic operating data |
| OD | Einsatzdaten | operation data |
| TD | Trainingsdatensatz | training data set |
| UED | Benutzerbewertungsdaten | user evaluation data |

## Patentansprüche

1. Computerimplementiertes Verfahren zur Ermittlung eines Arbeitszeitfensters (TWO) für ein Gartengerät (100) zur Pflege einer Rasenfläche, vorzugsweise für einen Mähroboter (101), einen Gartentraktor (102) oder einen Rasenmäher (103), wobei das Arbeitszeitfenster (TWO) auf Basis von Eingangsdaten (ID) und mittels einer Graswachstumssimulation (201) ermittelt wird und das Arbeitszeitfenster (TWO) zumindest eine Startzeit (ST) und/oder eine Arbeitsdauer (DO) für den Einsatz des Gartengeräts umfasst, wobei eine Bewertungsabfrage (EQ) zur Bewertung des Arbeitszeitfensters (TWO) generiert wird und die Bewertungsabfrage (EQ) auf einem Endgerät (110) eines Benutzers bereitgestellt wird und Benutzerbewertungsdaten (UED) des Arbeitszeitfensters (TWO) zur Erzeugung eines Trainingsdatensatzes (TD) für ein KI-System (202) abgefragt werden.

2. Computerimplementiertes Verfahren nach Anspruch 1, wobei das Arbeitszeitfenster (TWO) weiterhin mittels dem KI-System (202) ermittelt wird.

3. Computerimplementiertes Verfahren zur Ermittlung eines Arbeitszeitfensters (TWO) für ein Gartengerät (100) zur Pflege einer Rasenfläche, vorzugsweise für einen Mähroboter (101), einen Gartentraktor (102) oder einen Rasenmäher (103), wobei das Arbeitszeitfenster (TWO) auf Basis von Eingangsdaten (ID) und mittels eines trainierten KI-Systems (202) ermittelt wird und das Arbeitszeitfenster (TWO) zumindest eine Startzeit (ST) und/oder eine Arbeitsdauer (DO) für den Einsatz des Gartengeräts umfasst, wobei eine Bewertungsabfrage (EQ) zur Bewertung des Arbeitszeitfensters (TWO) generiert wird und die Bewertungsabfrage (EQ) auf einem Endgerät (110) eines Benutzers bereitgestellt wird und Benutzerbewertungsdaten (UED) des Arbeitszeitfensters (TWO) abgefragt werden zur Erzeugung eines Trainingsdatensatzes (TD), wobei der Trainingsdatensatz (TD) für das KI-System (202) ist oder für ein individuelles KI-System, das speziell auf den Benutzer oder das Benutzerszenario trainiert wird und ein korrigiertes Arbeitszeitfenster erzeugt, das anschließend anstelle des ursprünglich vorgeschlagenen Arbeitszeitfensters zur Steuerung des Gartengeräts verwendet werden kann.

4. Computerimplementiertes Verfahren nach Anspruch 3, wobei das Arbeitszeitfenster (TWO) weiterhin mittels einer Graswachstumssimulation (201) ermittelt wird.

5. Computerimplementiertes Verfahren nach einem der vorhergehenden Ansprüche, wobei die Benutzerbewertungsdaten (UED) zumindest eines der folgenden Elemente umfassen: ein gewünschtes Arbeitszeitfenster (DTWO), eine gewünschte Startzeit (DST), eine gewünschte Arbeitsdauer (DDO) und/oder eine qualitative Bewertung (QE) des Arbeitszeitfensters.

6. Computerimplementiertes Verfahren nach einem der vorhergehenden Ansprüche, wobei das Arbeitszeitfenster (TWO) auf Basis der Benutzerbewertungsdaten (UED) zu einem korrigierten Arbeitszeitfenster (RTWO) korrigiert wird, insbesondere wenn die Benutzerbewertung zeitlich vor dem Arbeitszeitfenster (TWO) erfolgt.

7. Computerimplementiertes Verfahren nach einem der vorhergehenden Ansprüche, wobei das Arbeitszeitfenster (TWO) oder ein korrigiertes Arbeitszeitfenster (RTWO) zur Steuerung des Gartengeräts (100) an einer Steuerungsschnittstelle bereitgestellt wird.

8. Computerimplementiertes Verfahren nach einem der vorhergehenden Ansprüche, wobei der Trainingsdatensatz (TD') zumindest eines der folgenden Elemente umfasst: die Eingangsdaten (ID), das Arbeitszeitfenster (TWO), das korrigierte Arbeitszeitfenster (RTWO), die Benutzerbewertungsdaten (UED) und/oder Einsatzdaten (OD).

9. Computerimplementiertes Verfahren nach einem der vorhergehenden Ansprüche, wobei die Eingangsdaten (ID) vorzugsweise zumindest eines der folgenden Elemente umfassen: Wetterdaten (WD), Gartengerätdaten (GDD), Benutzerprofildaten (UPD), Raseneigenschaftsdaten (LCD), historische Arbeitsdaten (HOD) und/oder Kalenderdaten (CD).

10. Computerimplementiertes Verfahren nach einem der vorhergehenden Ansprüche, wobei eine oder mehrere Bewertungsabfragen (EQ) vor und/oder nach dem Einsatz des Gartengeräts (100) generiert werden.

11. Computerimplementiertes Verfahren nach einem der vorhergehenden Ansprüche, wobei
- Einsatzdaten (OD) vom eingesetzten Gartengerät (100) und/oder dem Endgerät (110) des Benutzers bezogen werden, wenn der Einsatz des Gartengeräts bereits durchgeführt wurde; UND/ODER
- wobei die Einsatzdaten (OD) zur Generierung der Bewertungsabfrage (EQ) und/oder zur Generierung des Trainingsdatensatzes (TD) verarbeitet werden.

12. Computerimplementiertes Verfahren nach einem der vorhergehenden Ansprüche, wobei eine ausbleibende Benutzerbewertung als implizit positive Bewertung des Arbeitszeitfensters gewertet wird.

13. Computerimplementiertes Verfahren nach einem der vorhergehenden Ansprüche, wobei mindestens ein Trainingsdatensatz (TD') zum Trainieren des KI-Systems (202) in einer Trainingsdatenbank (250) gespeichert wird.

14. Computerimplementiertes Verfahren nach einem der vorhergehenden Ansprüche, wobei das KI-System (202) mit einer Vielzahl von Trainingsdaten (TD) aus der Trainingsdatenbank (250) trainiert wird.

15. Computerimplementiertes Verfahren nach einem der vorhergehenden Ansprüche, wobei die Trainingsdatensätze (TD) mit einem Plausibilitätsfilter gefiltert werden.

## Claims

1. Computer-implemented method for determining a work time window (TWO) for a gardening device (100) for maintaining a lawn area, preferably for a robotic lawnmower (101), a garden tractor (102) or a lawnmower (103), wherein the work time window (TWO) is determined on the basis of input data (ID) and by means of a grass growth simulation (201) and the work time window (TWO) comprises at least a start time (ST) and/or a work duration (DO) for the use of the gardening device, wherein an evaluation query (EQ) is generated for evaluating the work time window (TWO) and the evaluation query (EQ) is provided on a terminal device (100) of a user (110) and user evaluation data (UED) of the work time window (TWO) are queried to generate a training dataset (TD) for an AI system (202).

2. Computer-implemented method according to claim 1, wherein the work time window (TWO) is further determined by means of the AI system (202).

3. Computer-implemented method for determining a work time window (TWO) for a gardening device (100) for maintaining a lawn area, preferably for a robotic lawnmower (101), a garden tractor (102) or a lawnmower (103), wherein the work time window (TWO) is determined on the basis of input data (ID) and by means of a trained AI system (202) and the work time window (TWO) comprises at least a start time (ST) and/or a work duration (DO) for the use of the gardening device, wherein an evaluation query (EQ) is generated for evaluating the work time window (TWO) and the evaluation query (EQ) is provided on a terminal device (110) of a user and user evaluation data (UED) of the work time window (TWO) are queried to generate a training dataset (TD), wherein the training dataset (TD) is for the AI system (202) or for an individual AI system that is specifically trained for the user or the user scenario and generates a rectified work time window that can then be used instead of the originally proposed work time window to control the gardening device.

4. Computer-implemented method according to claim 3, wherein the work time window (TWO) is further determined by means of a grass growth simulation (201).

5. A computer-implemented method according to one of the preceding claims, wherein the user evaluation data (UED) comprises at least one of the following elements: a desired work time window (DTWO), a desired start time (DST), a desired work duration (DDO) and/or a qualitative evaluation (QE) of the work time window.

6. Computer-implemented method according to one of the preceding claims, wherein the work time window (TWO) is rectified to a rectified work time window (RTWO) on the basis of the user evaluation data (UED), in particular if the user evaluation takes place before the work time window (TWO).

7. Computer-implemented method according to one of the preceding claims, wherein the work time window (TWO) or a rectified work time window (RTWO) for controlling the gardening device (100) is provided at a control interface.

8. Computer-implemented method according to one of the preceding claims, wherein the training dataset (TD') comprises at least one of the following elements: the input data (ID), the work time window (TWO), the rectified work time window (RTWO), the user evaluation data (UED) and/or operational data (OD).

9. Computer-implemented method according to one of the preceding claims, wherein the input data (ID) preferably comprise at least one of the following elements: weather data (WD), gardening device data (GDD), user profile data (UPD), lawn characteristic data (LCD), historical work data (HOD) and/or calendar data (CD).

10. Computer-implemented method according to one of the preceding claims, wherein one or more evaluation queries (EQ) are generated before and/or after the use of the gardening device (100).

11. Computer-implemented method according to one of the preceding claims, wherein
- operational data (OD) from the gardening device (100) used and/or the user's terminal device (110) is obtained when the gardening device has already been used; AND/OR
- wherein the operational data (OD) is processed to generate the evaluation query (EQ) and/or to generate the training dataset (TD).

12. Computer-implemented method according to one of the preceding claims, wherein a lack of user evaluation is interpreted as an implicitly positive evaluation of the work time window.

13. Computer-implemented method according to one of the preceding claims, wherein at least one training dataset (TD') for training the AI system (202) is stored in a training database (250).

14. Computer-implemented method according to one of the preceding claims, wherein the AI system (202) is trained with a plurality of training data (TD) from the training database (250).

15. Computer-implemented method according to one of the preceding claims, wherein the training datasets (TD) are filtered with a plausibility filter.

## Revendications

1. Procédé mis en œuvre par ordinateur pour déterminer une fenêtre de temps de travail (TWO) pour un outil de jardinage (100) destiné à l'entretien d'une surface de pelouse, de préférence pour un robot-tondeuse (101), un tracteur de jardin (102) ou une tondeuse à gazon (103), la fenêtre de temps de travail (TWO) étant déterminée sur la base de données d'entrée (ID) et au moyen d'une simulation de croissance du gazon (201) et la fenêtre de temps de travail (TWO) comprenant au moins une heure de début (ST) et/ou une durée de travail (DO) pour l'utilisation de l'outil de jardinage, une requête d'évaluation (EQ) destinée à évaluer la fenêtre de temps de travail (TWO) étant générée et la requête d'évaluation (EQ) étant fournie sur un terminal (110) d'un utilisateur, et les données d'évaluation de l'utilisateur (UED) de la fenêtre de temps de travail (TWO) étant demandées pour générer un jeu de données d'entraînement (TD) destiné à un système d'IA (202).

2. Procédé mis en œuvre par ordinateur selon la revendication 1, dans lequel la fenêtre de temps de travail (TWO) est en outre déterminée au moyen du système d'IA (202).

3. Procédé mis en œuvre par ordinateur pour déterminer une fenêtre de temps de travail (TWO) pour un outil de jardinage (100) destiné à l'entretien d'une surface de pelouse, de préférence pour un robot-tondeuse (101), un tracteur de jardin (102) ou une tondeuse à gazon (103), la fenêtre de temps de travail (TWO) étant déterminée sur la base de données d'entrée (ID) et au moyen d'un système d'IA entraîné (202) et la fenêtre de temps de travail (TWO) comprenant au moins une heure de début (ST) et/ou une durée de travail (DO) pour l'utilisation de l'outil de jardinage, une requête d'évaluation (EQ) destinée à évaluer la fenêtre de temps de travail (TWO) étant générée et la requête d'évaluation (EQ) étant fournie sur un terminal (110) d'un utilisateur, et les données d'évaluation de l'utilisateur (UED) de la fenêtre de temps de travail (TWO) étant demandées pour générer un jeu de données d'entraînement (TD), le jeu de données d'entraînement (TD) étant destiné au système d'IA (202) ou à un système d'IA individuel qui est entraîné spécifiquement pour l'utilisateur ou le scénario d'utilisateur et qui génère une fenêtre de temps de travail corrigée, qui peut ensuite être utilisée pour la commande de l'outil de jardinage à la place de la fenêtre de temps de travail initialement proposée.

4. Procédé mis en œuvre par ordinateur selon la revendication 3, dans lequel la fenêtre de temps de travail (TWO) est en outre déterminée au moyen d'une simulation de croissance du gazon (201).

5. Procédé mis en œuvre par ordinateur selon l'une des revendications précédentes, dans lequel les données d'évaluation de l'utilisateur (UED) comprennent au moins l'un des éléments suivants : une fenêtre de temps de travail souhaitée (DTWO), une heure de début souhaitée (DST), une durée de travail souhaitée (DDO) et/ou une évaluation qualitative (QE) de la fenêtre de temps de travail.

6. Procédé mis en œuvre par ordinateur selon l'une des revendications précédentes, dans lequel la fenêtre de temps de travail (TWO) est corrigée en une fenêtre de temps de travail corrigée (RTWO) sur la base des données d'évaluation de l'utilisateur (UED), en particulier lorsque l'évaluation de l'utilisateur a lieu avant la fenêtre de temps de travail (TWO).

7. Procédé mis en œuvre par ordinateur selon l'une des revendications précédentes, dans lequel la fenêtre de temps de travail (TWO) ou une fenêtre de temps de travail corrigée (RTWO) est fournie à une interface de commande pour commander l'outil de jardinage (100).

8. Procédé mis en œuvre par ordinateur selon l'une des revendications précédentes, dans lequel le jeu de données d'entraînement (TD') comprend au moins l'un des éléments suivants : les données d'entrée (ID), la fenêtre de temps de travail (TWO), la fenêtre de temps de travail corrigée (RTWO), les données d'évaluation de l'utilisateur (UED) et/ou des données d'utilisation (OD).

9. Procédé mis en œuvre par ordinateur selon l'une des revendications précédentes, dans lequel les données d'entrée (ID) comprennent de préférence au moins l'un des éléments suivants : des données météorologiques (WD), des données d'outil de jardinage (GDD), des données de profil d'utilisateur (UPD), des données de propriété de pelouse (LCD), des données de travail historiques (HOD) et/ou des données de calendrier (CD).

10. Procédé mis en œuvre par ordinateur selon l'une des revendications précédentes, dans lequel une ou plusieurs requêtes d'évaluation (EQ) sont générées avant et/ou après l'utilisation de l'outil de jardinage (100).

11. Procédé mis en œuvre par ordinateur selon l'une des revendications précédentes, dans lequel
- des données d'utilisation (OD) sont obtenues en provenance de l'outil de jardinage utilisé (100) et/ou du terminal (110) de l'utilisateur, lorsque l'utilisation de l'outil de jardinage a déjà été effectuée ; ET/OU
- dans lequel les données d'utilisation (OD) sont traitées pour générer la requête d'évaluation (EQ) et/ou pour générer le jeu de données d'entraînement (TD).

12. Procédé mis en œuvre par ordinateur selon l'une des revendications précédentes, dans lequel une absence d'évaluation de l'utilisateur est considérée comme une évaluation implicitement positive de la fenêtre de temps de travail.

13. Procédé mis en œuvre par ordinateur selon l'une des revendications précédentes, dans lequel au moins un jeu de données d'entraînement (TD') destiné entraîner le système d'IA (202) est stocké dans une base de données d'entraînement (250).

14. Procédé mis en œuvre par ordinateur selon l'une des revendications précédentes, dans lequel le système d'IA (202) est entraîné avec une multitude de données d'entraînement (TD) issues de la base de données d'entraînement (250).

15. Procédé mis en œuvre par ordinateur selon l'une des revendications précédentes, dans lequel les jeux de données d'entraînement (TD) sont filtrés à l'aide d'un filtre de plausibilité.
